# EUROPEAN PATENT SPECIFICATION

(11) **EP 3 111 813 B1**
(45) Date of publication and mention of the grant of the patent: **01.04.2020**
(21) Application number: 16176993.0
(22) Date of filing: 29.06.2016
(51) Int. Cl.: A47J 37/00, A47J 27/00, A47J 37/06

(54) **COOKING APPARATUS HAVING AUTOMATIC KEEP WARM FUNCTION AND METHOD FOR CONTROLLING THE SAME**
GARVORRICHTUNG MIT AUTOMATISCHER WARMHALTEFUNKTION UND VERFAHREN ZUR STEUERUNG DAVON
APPAREIL DE CUISSON AVEC FONCTION POUR GARDER CHAUD AUTOMATIQUEMENT ET SON PROCÉDÉ DE COMMANDE

(30) Priority: 30.06.2015 KR 20150093129
(43) Date of publication of application: 04.01.2017
(73) Proprietor: Samsung Electronics Co., Ltd., Gyeonggi-do 16677 (KR)
(72) Inventor: CHOI, Kun-woo, Gyeonggi-do (KR); PARK, Yong-jong, Gyeonggi-do (KR); KO, Kyoung-hoon, Gyeonggi-do (KR); SHIN, Jeong-eun, Gyeonggi-do (KR); WON, Tae-yeon, Incheon (KR)
(74) Representative: Walaski, Jan Filip

(56) References cited:
- KR-B1- 101 468 042
- US-A1- 2009 139 981
- US-A1- 2012 192 850
- US-A1- 2015 040 774

## Description

The present invention relates to a cooking apparatus, and more particularly, to a cooking apparatus having an automatic keep warm function capable of cooking food using residual heat of a heating source so that a cooking chamber is automatically in keep warm temperature when cooking is completed and a method for controlling the same.

Generally, a cooking apparatus has an electric heater, which is a heating source, embedded therein and performs a cooking operation by a direct heating method which heats food using heat generation from the electric heating source.

When the set cooking time is completed, the typical cooking apparatus completes the cooking of food. If a user does not immediately eat the cooked food from the cooking apparatus, the food cools, which is undesirable.

Therefore, if the user does not immediately eat after the food is cooked, a user must manually manipulate the cooking apparatus to perform a keep warm function so that the food remains warm in order to prevent the food from cooling.

However, if after the cooking of the food is completed, the user directly changes the cooking apparatus to the keep warm function, the food may be overcooked due to residual heat remaining in a cooking chamber of the cooking apparatus.

To prevent food from overcooking, the user needs to maintain the temperature of food within the cooking apparatus only after the temperature of the cooking chamber of the cooking apparatus is below the keep warm temperature which will occur with the passage of time. However, it may be difficult for the user to keep the proper temperature of food within the cooking apparatus without overcooking the food.

Therefore, the development of a cooking apparatus for automatically keeping a temperature of food to enable a user to eat warm food any time after he/she cooks food and for preventing food from being overcooked is required.

KR 101468042 relates to an electric cooker and a method for controlling a warming function of an electric cooker.

US 2012/192850 relates to a multi-function oven.

US 2015/040774 relates to a toaster oven.

US 2009/0139981 relates to an electric oven.

One or more exemplary embodiments overcome the above disadvantages and other disadvantages not described above. However, one or more embodiments are not required to overcome the disadvantages described above, and an exemplary embodiment may not overcome any of the problems described above.

One or more embodiments provide a cooking apparatus having an automatic keep warm function and a method for controlling the same capable of preventing food from being overcooked and automatically keeping a temperature of food when the cooking of the food is completed.

According to an aspect of one or more embodiments, a cooking apparatus is provided according to claim 1.

The second cooking time may be less than or equal to 30% of a total cooking time.

The residual heat cooking temperature may be about 60% of the normal cooking temperature.

The second cooking time for which the food is cooked in the residual heat cooking mode may include a non-heating time for which the heating source is turned off and a heating time for which the heating source is turned on at the residual heat cooking temperature, and the heating time may be set to be less than or equal to 50% of the second cooking time.

The control unit may use a timer to determine whether the first cooking time passes and if it is determined that the first cooking time passes, turn off the heating source. The control unit may use the temperature sensor to determine whether the temperature of the cooking chamber reaches the residual heat cooking temperature and if it is determined that the temperature of the cooking chamber reaches the residual heat cooking temperature, turn on the heating source. The control unit may use the timer to determine whether the time for which the heating source is turned on exceeds a preset heating time and if it is determined that the time for which the heating source is turned on exceeds the preset heating time, turn off the heating source.

The control unit may use the temperature sensor to determine whether the temperature of the cooking chamber reaches the keep warm temperature and if it is determined that the temperature of the cooking chamber reaches the keep warm temperature, the control unit may control the heating source to keep the temperature of the cooking chamber at the keep warm temperature.

The residual heat cooking mode may include at least two different residual heat cooking temperatures and the at least two different residual heat cooking temperatures may be lowered stepwise with the passage of time.

If the automatic keep warm function is not selected by the automatic keep warm function setting unit, the control unit may control the heating source to cook the food at the normal cooking temperature.

When the food is cooked at the normal cooking temperature in a state in which the automatic keep warm function may not be selected, if the remaining cooking time is more than the second cooking time, the automatic keep warm setting unit may select the automatic keep warm function, and if the remaining cooking time is smaller than the second cooking time, the automatic keep warm setting unit may not select the automatic keep warm function.

When the food is cooked at the normal cooking temperature in the state in which the automatic keep warm function may be selected, if the remaining cooking time is more than the second cooking time, the automatic keep warm setting unit may cancel the automatic keep warm function, and if the remaining cooking time is smaller than the second cooking time, the automatic keep warm setting unit may not cancel the automatic keep warm function.

According to one or more embodiments, a method for controlling a cooking apparatus includes the steps disclosed in claim 11.

The second cooking time may be less than or equal to 30% of a total cooking time.

The second cooking time for which the food is cooked in the residual heat cooking mode may include a non-heating time for which the heating source is turned off and a heating time for which the heating source is turned on at the residual heat cooking temperature, and the residual heat cooking temperature may be about 60% of the normal cooking temperature.

The heating time may be set to be less than or equal to 50% of the second cooking time.

The residual heat cooking mode may include at least two different residual heat cooking temperatures and the at least two different residual heat cooking temperatures may be lowered stepwise with the passage of time.

If the automatic keep warm function is not selected, the food may be cooked at the normal cooking temperature for a general cooking time.

When the food is cooked at the normal cooking temperature in a state in which the automatic keep warm function may not be selected, if the remaining cooking time is more than the second cooking time, the automatic keep warm function may be selected, and if the remaining cooking time is smaller than the second cooking time, the automatic keep warm function may not be selected.

When the food is cooked at the normal cooking temperature in the state in which the automatic keep warm function may be selected, if the remaining cooking time is more than the second cooking time, the automatic keep warm function may be canceled, and if the remaining cooking time is smaller than the second cooking time, the automatic keep warm function may not be canceled.

In an aspect of one or more embodiments, there is provided a cooking apparatus as disclosed in claim 1.

The input unit may be a selection button or may be a menu on a touch screen.

The above and/or other aspects will be more apparent by describing certain exemplary embodiments with reference to the accompanying drawings, in which:
FIG. 1 is a diagram illustrating a cooking apparatus having an automatic keep warm function according to an exemplary embodiment;
FIG. 2 is a functional block diagram of the cooking apparatus having an automatic keep warm function according to an exemplary embodiment;
FIG. 3 is a graph illustrating an automatic keep warm operation in the cooking apparatus having an automatic keep warm function according to an exemplary embodiment;
FIG. 4 is a graph illustrating another example of an automatic keep warm operation in the cooking apparatus having an automatic keep warm function according to an exemplary embodiment;
FIG. 5 is a graph illustrating a general cooking operation in which an automatic keep warm function is not selected in the cooking apparatus having an automatic keep warm function according to an exemplary embodiment; and
FIG. 6 is a flow chart illustrating a method for controlling a cooking apparatus having an automatic keep warm function according to an exemplary embodiment.

Reference will now be made in detail to embodiments, examples of which are illustrated in the accompanying drawings, wherein like reference numerals refer to the like elements throughout. Embodiments are described below by referring to the figures.

A cooking apparatus having an automatic keep warm function and a method for controlling the same according to an exemplary embodiment will be described in detail with reference to the accompanying drawings.

Embodiments described below are exemplary and may be variously changed. However, in describing one or more embodiments, if it is determined that a very detailed description of relevant known functions or components makes aspects of one or more embodiments obscure, the detailed description and illustration thereof will be omitted. Further, to help understanding of one or more embodiments, the accompanying drawings are not necessarily illustrated to scale but dimensions of some components may be illustrated to be exaggerated.

The terms "first", "second", etc. may be used to describe diverse components, but the components are not limited by the terms. The terms are only used to distinguish one component from the others.

The terms used in this disclosure are only used to describe exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In one or more exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

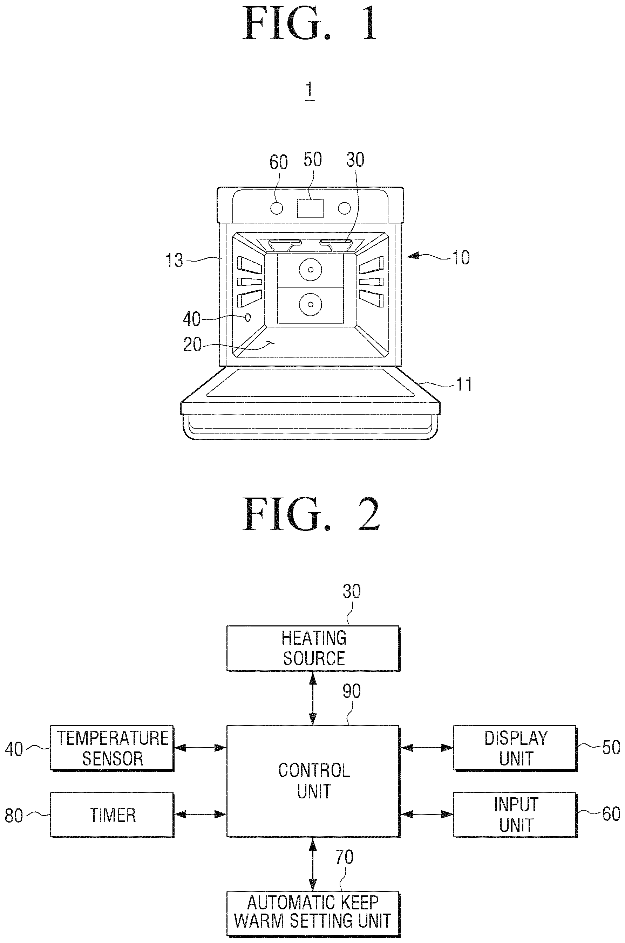

FIG. 1 is a diagram illustrating a cooking apparatus having an automatic keep warm function according to an exemplary embodiment. FIG. 2 is a functional block diagram of the cooking apparatus having an automatic keep warm function according to an exemplary embodiment.

Referring to FIGS. 1 and 2, a cooking apparatus 1 having an automatic keep warm function according to an exemplary embodiment includes a main body 10 and a cooking chamber 20 provided in the main body 10.

A lower portion of a front surface of the main body 10 is provided with a door 11 by which a front surface 13 of the main body 10 may be opened and closed. By this configuration, when the door 11 is opened, a cooking chamber 20 in which food may be seated is opened.

An upper portion of the cooking chamber 20 is provided with a heating source 30. The heating source 30 generates heat to heat the cooking chamber 20, thereby cooking food. The heating source 30 may be a heater. An inner surface of the cooking chamber 20 is provided with a temperature sensor 40 for sensing a temperature of the cooking chamber 20. Further, a food stand (not illustrated) for supporting food may be installed under the heating source 30. The food stand may be separably installed inside the cooking chamber 20.

An upper portion of a front surface 13 of the main body 10 is provided with a display unit 50 for displaying an operation state of the cooking apparatus 1 and an input unit 60 for inputting an instruction to operate the cooking apparatus 1. The display unit 50 may be implemented as a liquid crystal display or a touch screen. The input unit 60 may be implemented as a plurality of buttons, a dial, and a touch screen.

The upper portion of the front surface 13 of the main body 10 may be provided with an automatic keep warm setting unit 70. The automatic keep warm setting unit 70 is to allow a user to select whether to use the automatic keep warm function which may be implemented by various methods.

For example, the automatic keep warm setting unit 70 may be formed as a selection button. In this case, the automatic keep warm setting unit 70 may be configured so that if the user presses the selection button, the automatic keep warm function is selected, and if the user again presses the selection button, the automatic keep warm function is released. In this case, the automatic keep warm setting unit 70 may be provided in the input unit 60.

As another example, the automatic keep warm setting unit 70 may be implemented as a menu displayed on the touch screen. In detail, the menu to set the automatic keep warm function is displayed on the touch screen and if the user selects the automatic keep warm function from the displayed menu, the cooking apparatus 1 performs the automatic keep warm function. Further, the automatic keep warm setting unit 70 may be configured so that when the selection of the automatic keep warm function from the menus displayed on the touch screen is released, the automatic keep warm function is released. In this case, the automatic keep warm setting unit 70 may be provided at the display unit 50.

The control unit 90 is to generally control the cooking apparatus 1 and controls the heating source 30 depending on the selected condition to do cooking. The control unit 90 does cooking in an automatic keep warm cooking mode when the automatic keep warm setting unit 70 selects the automatic keep warm function and does cooking in a general cooking mode when the automatic keep warm setting unit 70 does not select the automatic keep warm function.

In the case of the automatic keep warm cooking mode, the control unit 90 cooks food in two modes of a normal cooking mode and a residual heat cooking mode. In the normal cooking mode, the control unit 90 controls the heating source 30 to keep the cooking chamber 20 at a normal cooking temperature to cook food for a first cooking time. Next, in the residual heat cooking mode, food is cooked for a second cooking time by using residual heat of the heating source 30 and heat generated from the heating source 30 keeping the residual heat cooking temperature to be lower than the normal cooking temperature, such that the cooking of the food is completed. Further, in the automatic keep warm mode, when the cooking of the food is completed, that is, when the residual cooking mode is completed, the control unit 90 controls the heating source 30 to set the temperature of the cooking chamber 200 to be the preset keep warm temperature. Therefore, if cooking is done in the automatic keep warm cooking mode, even when the cooking apparatus performs the keep warm immediately after the cooking is completed, the case in which the food is overcooked does not occur.

In detail, the control unit 90 confirms the automatic keep warm setting unit 70 to confirm whether the automatic keep warm function is set. If the automatic keep warm function is set, the control unit 90 performs the automatic keep warm cooking mode.

The automatic keep warm cooking mode includes a normal cooking section in which the normal cooking mode is performed, a residual heat cooking section in which a residual heat cooking mode is performed, and a keep warm section. The normal cooking section is a section in which the control unit 90 heats foods at the normal cooking temperature for the first cooking time. Here, the normal cooking temperature refers to a predetermined cooking temperature to cook certain food. The normal cooking temperature may be defined depending on a kind of food. In the normal cooking section, the control unit 90 maymeasure the temperature of the cooking chamber 20 using the temperature sensor 40 to repeatedly turn on/off the heating source 30, thereby keeping the cooking chamber 20 at the normal cooking temperature. In detail, the control unit 90 turns off the heating source 30 if it is determined that the temperature of the cooking chamber 20 is higher than the normal cooking temperature and again turns on the heating source 30 if it is determined that the temperature of the cooking chamber 20 is lower than the normal cooking temperature.

The control unit 90 controls the heating source by the foregoing method to keep the temperature of the cooking chamber 20 at the normal cooking temperature.

The residual heat cooking section is a section in which food is cooked in the residual heat cooking mode for the second cooking time and when the residual heat cooking section is completed, the cooking of the food is completed. When the heating source 30 is turned off, the residual heat cooking mode cooks food by using the residual heat of the heating source 30 and the heat generated from the heating source 30 kept at the residual heat cooking temperature and if the residual heat cooking section passes, the temperature of the cooking chamber 20 is lowered from the normal cooking temperature to the keep warm temperature. In the residual heat cooking section, to prevent the temperature of the cooking chamber 20 from being suddenly lowered and to cook food, the control unit 90 controls the heating source 30 to be turned off when the normal cooking section is completed and then performs a turn on/off on the heating source 30 to keep the temperature of the cooking chamber 20 at the residual heat cooking temperature. Therefore, the control unit 90 keeps the temperature of the cooking chamber 20 at the residual heat cooking temperature for a predetermined time. In this case, the control unit 90 measures the temperature of the cooking chamber 20 using the temperature sensor 40 to repeatedly turns on/off the heating source 30, thereby keeping the cooking chamber 20 at the residual heat cooking temperature. When the predetermined time at which the residual heat cooking temperature is kept passes, the control unit 90 turns off the heating source 30 to lower the temperature of the cooking chamber 20 to the keep warm temperature.

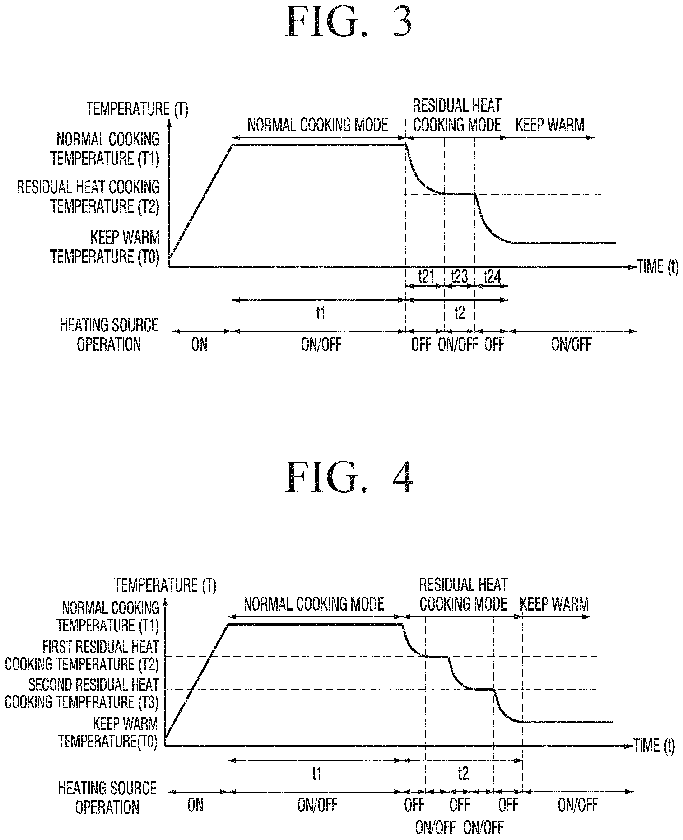

FIG. 3 is a graph illustrating an automatic keep warm operation in the cooking apparatus having an automatic keep warm function according to an exemplary embodiment.

Referring to FIG. 3, a second cooking time t2 for which the residual heat cooking mode is performed includes non-heating times t21 and t24 for which the heating source 30 is turned off and food is cooked at the residual heat of the heating source 30 and a heating time t23 for which the heating source 30 is turned on to keep the cooking chamber 20 at a residual heat cooking temperature T2 and cook food at the residual heat cooking temperature T2. In this case, the non-heating times t21 and t24 may include the first non-heating time t2i for which the heating source 30 is turned off to lower the temperature of the cooking chamber 20 from the normal cooking temperature T1 to the residual heat cooking temperature T2 and the second non-heating time T24 for which the heating source 30 is turned off to lower the temperature of the cooking chamber 20 from the residual heat cooking temperature T2 to the keep warm temperature T0.

The second cooking time t2 and the residual heat cooking temperature T2 for which the residual heat cooking mode is performed are determined depending on a kind of food. According an exemplary embodiment, if food is selected, the residual heat cooking temperature T2 and the second cooking time t2 may be implemented to be automatically set.

In this case, the second cooking time t2 corresponding to the residual heat cooking section may be set to be within 30% of a total cooking time. Further, the heating time t23 of the second cooking time t2 may be set to be within 50% of the second cooking time t2. Here, the total cooking time refers to a sum of the first cooking time t1 for which cooking is done in the normal cooking mode and the second cooking time t2 for which cooking is done in the residual heat cooking mode. For example, if the total cooking time is 20 minutes, the second cooking time t2 may be set to be equal to or less than about 6 minutes.

The residual heat cooking temperature T2 may be set to be equal to or less than 60% of the normal cooking temperature T1. For example, if the normal cooking temperature T1 is 200 °C, the residual heat cooking temperature T2 may be set to be equal to or less than 120 °C.

The control unit 90 may use an apparatus for measuring time, for example, a timer 80 to determine whether a cooking time passes. The timer 80 may be integrally formed with the control unit 90 or separately formed form the control unit 90.

The control unit 90 uses the timer 80 to determine whether the first cooking time t1 passes and if it is determined that the first cooking time t1 passes, turns off the heating source 30. Further, in the residual heat cooking section, the control unit 90 uses the timer 80 to determine whether the time for which the heating source 30 is turned on exceeds the preset heating time t23 and if it is determined that the time for which the heating source 30 is turned on exceeds the heating time t23, turns off the heating source 30.

The keep warm section is a section in which the cooked food is warmly kept. In the keep warm section, the control unit 90 controls the heating source 30 to keep the temperature of the cooking chamber 20 at the keep warm temperature T0. In detail, the control unit 90 measures the temperature of the cooking chamber 20 using the temperature sensor 40 to repeatedly perform an operation of turning off the heating source 30 if the temperature of the cooking chamber 20 is higher than the keep warm temperature T0 and turning on the heating source 30 if the temperature of the cooking chamber 20 is lower than the keep warm temperature To, thereby keeping the cooking chamber 20 at the keep warm temperature T0. Here, the keep warm temperature T0 may be determined depending on a kind of food. Further, the keep warm temperature may be preset depending on a kind of food or a cooking menu and the user may directly set the appropriate keep warm temperature.

The case in which the residual heat cooking mode includes only one residual heat cooking temperature T2 is described above. However, the residual heat cooking mode is not limited thereto and therefore may also include at least two different residual heat cooking temperatures having different temperatures. At least two residual heat cooking temperatures are set to be lower stepwise with the passage of time. FIG. 4 illustrates an example in which cooking is done in the residual heat cooking mode including the two residual heat cooking temperatures.

FIG. 4 is a graph illustrating another example of an automatic keep warm operation in the cooking apparatus having an automatic keep warm function according to an exemplary embodiment.

Referring to FIG. 4, the residual heat cooking mode includes the two different residual heat cooking temperatures T2 and T3. In this case, the first residual heat cooking temperature T2 adjacent to the normal cooking section is set to be lower than the normal cooking temperature T1 and to be higher than the second residual heat cooking temperature T3 adjacent to the keep warm section. The second residual heat cooking temperature T3 is set to be lower than the first residual heat cooking temperature T2 but is set to be higher than the keep warm temperature T0. Therefore, in the residual heat cooking section, the residual heat cooking temperature is stepwise lowered from T2 to T3 with the passage of time.

The case in which when the automatic keep warm function is selected, the control unit 90 controls the cooking apparatus 1 to cook food is described above.

When the user releases the automatic keep warm function using the automatic keep warm setting unit 70, that is, when the automatic keep warm function is not set, the cooking apparatus 1 having an automatic keep warm function according to an exemplary embodiment is operated identically with or similarly to the cooking apparatus according to the related art.

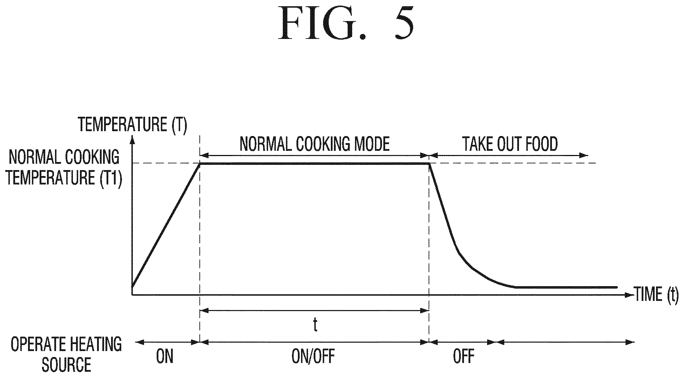

Hereinafter, when the automatic keep warm function is not set, that is, in the case of the general cooking mode, a method for controlling, by the control unit 90, the cooking apparatus 1 will be described with reference to FIG. 5.

FIG. 5 is a graph illustrating a general cooking operation in which an automatic keep warm function is not selected in the cooking apparatus having an automatic keep warm function according to an exemplary embodiment.

In the case of the general cooking mode in which the automatic keep warm function is not selected, the control unit 90 turns on the heating source 30 to increase the temperature of the cooking chamber 20 to the normal cooking temperature T1. Next, the control unit 90 controls the heating source 30 to keep the temperature of the cooking chamber 20 at the normal cooking temperature T1 for a general cooking time t. In detail, the control unit 90 measures the temperature of the cooking chamber 20 using the temperature sensor 40 to repeat an operation of turning off the heating source 30 if the temperature of the cooking chamber 20 is higher than the normal cooking temperature T1 and turning on the heating source 30 if the temperature of the cooking chamber 20 is lower than the normal cooking temperature T1. The control unit 90 controls the heating source 30 for the general cooking time t by the foregoing method to keep the temperature of the cooking chamber 20 at the normal cooking temperature T1. Here, the general cooking time t is determined depending on a kind of food. Generally, the general cooking time t may be smaller than a time taken to cook food in the automatic keep warm cooking mode, that is, a sum of the first cooking time t1 and the second cooking time t2 (t < t1 + t2). In other words, the case in which cooking is done in the automatic keep warm cooking mode includes the residual heat cooking section in which cooking is done at the residual heat cooking temperature T2 having a cooking temperature lower than that of the case in which cooking is done in the general cooking mode, such that the cooking time of the automatic keep warm cooking mode may be longer than the general cooking time of the general cooking mode.

If the general cooking time t passes, the cooking of the food is completed. Next, the control unit 90 displays the cooking completion on the display unit 50 or rings an alarm to let the user take out the cooked food.

After the general cooking time t passes, the control unit 90 keeps the heating source 30 in a turned off state, such that the temperature of the cooking chamber 20 is lowered to a room temperature with the passage of time. Therefore, even after the general cooking time t passes, when food is left in the cooking chamber 20 as it is, the food has cooled.

The case in which the user selects the automatic keep warm function prior to cooking is described above. However, the cooking apparatus 1 having an automatic keep warm function according to an exemplary embodiment may be configured to select or cancel the automatic keep warm function during cooking in some cases.

For example, the cooking apparatus 1 may also cancel the automatic keep warm function during cooking in the state in which the automatic keep warm function is selected. If the automatic keep warm function is canceled, the cooking apparatus 1 does the cooking in the general cooking mode. However, there may be the case in which the automatic keep warm function may be canceled or may not be canceled depending on the remaining cooking time.

In detail, in the case in which the remaining cooking time is more than the second cooking time t2 for which the cooking is done in the residual heat cooking mode, the user may cancel the automatic keep warm function using the automatic keep warm setting unit 70. However, when the remaining cooking time is smaller than the second cooking time t2, the automatic keep warm function may not be canceled. Therefore, when the automatic keep warm function of the automatic keep warm setting unit 70 is canceled during cooking, the control unit 90 determines the remaining cooking time and compares the remaining cooking time with the second cooking time t2. If the remaining cooking time is larger than the second cooking time t2, the control unit 90 cancels the automatic keep warm function and does cooking in the general cooking mode. However, if the remaining cooking time is smaller than the second cooking time t2, the control unit 90 outputs a message indicating that the automatic keep warm function may not be canceled to the display unit 50 and continues to do cooking in the automatic keep warm cooking mode.

On the contrary, the cooking apparatus 1 having an automatic keep warm function according to an exemplary embodiment may select the automatic keep warm function while cooking is done in the general cooking mode.

If the automatic keep warm function is selected while cooking is done in the general cooking mode, the cooking apparatus 1 does cooking in the automatic keep warm cooking mode. However, there may be the case in which the automatic keep warm function may be selected or may not be selected depending on the remaining cooking time. In detail, in the case in which the remaining cooking time is more than the second cooking time t2 for which the cooking is done in the residual heat cooking mode, the user may select the automatic keep warm function using the automatic keep warm setting unit 70. However, when the remaining cooking time is smaller than the second cooking time t2, the automatic keep warm function may not be selected. Therefore, when the automatic keep warm function of the automatic keep warm setting unit 70 is selected while cooking is done in the general cooking mode, the control unit 90 determines the remaining cooking time and compares the remaining cooking time with the second cooking time t2. If the remaining cooking time is larger than the second cooking time t2, the control unit 90 does cooking in the automatic keep warm cooking mode. However, if the remaining cooking time is smaller than the second cooking time t2, the control unit 90 outputs a message indicating that the automatic keep warm function may not be selected to the display unit 50 and continues to do cooking in the general cooking mode.

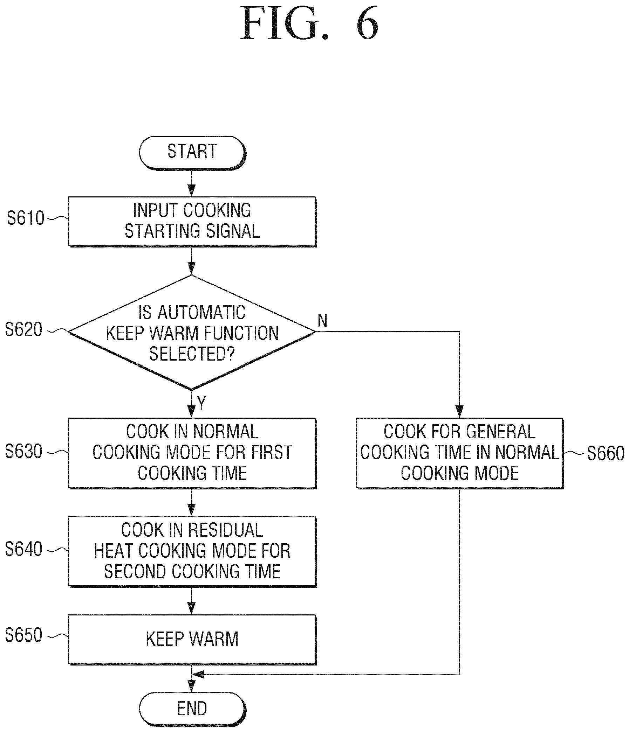

Hereinafter, a method for controlling a cooking apparatus having an automatic keep warm function according to an exemplary embodiment will be described with reference to FIGS. 2 and 6.

FIG. 6 is a flow chart illustrating a method for controlling a cooking apparatus having an automatic keep warm function according to an exemplary embodiment.

The control unit 90 determines whether a cooking starting signal is input (S610).

If the cooking starting signal is input, the control unit 90 determines whether the automatic keep warm function is selected (S620). In detail, the control unit 90 may confirm whether the automatic keep warm function is set in the automatic keep warm setting unit 70.

If the automatic keep warm function is selected, the control unit 90 performs the normal cooking mode in which food is cooked at the normal cooking temperature for the first cooking time (S630). In detail, the control unit 90 turns on the heating source 30 to let the cooking chamber 20 reach the normal cooking temperature. Next, the control unit 90 controls the heating source 30 to keep the cooking chamber 20 at the normal cooking temperature by detecting the temperature of the cooking chamber 20 using the temperature sensor 40. That is, the control unit 90 measures the temperature of the cooking chamber 20 using the temperature sensor 40 to repeat the operation of turning off the heating source 30 if the temperature of the cooking chamber 20 is higher than the normal cooking temperature and turning on the heating source 30 if the temperature of the cooking chamber 20 is lower than the normal cooking temperature, thereby keeping the temperature of the cooking chamber 20 at the normal cooking temperature.

The control unit 90 determines whether the first cooking time passes. In this case, the control unit 90 may use the timer 80 to determine whether the first cooking time passes. If the first cooking time passes, the control unit 90 does cooking in the residual heat cooking mode for the second cooking time to complete the cooking of the food and when the cooking of the food is completed, performs a control to set the temperature of the cooking chamber 20 to be the keep warm temperature.

In detail, the control unit 90 turns off the heating source 30 if the first cooking time passes and senses the temperature of the cooking chamber 20 using the temperature sensor 40. Food is cooked by the residual heat of the heating source 30 while the heating source 30 is turned off. If the temperature of the cooking chamber 20 is lowered to the residual heat cooking temperature, the control unit 90 again turns on the heating source 30. Next, the control unit 90 cooks foods at the residual heat cooking temperature while keeping the residual heat cooking temperature for a predetermined time. In this case, the control unit 90 measures the temperature of the cooking chamber 20 using the temperature sensor 40 and repeatedly turns on/off the heating source 30 depending on the measured temperature to keep the cooking chamber 20 at the residual heat cooking temperature. If the predetermined time to keep the residual heat cooking temperature passes, the control unit 90 turns off the heating source 30. Next, food is cooked by the residual heat of the heating source 30 while the temperature of the cooking chamber 30 is lowered. In this case, the control unit 90 uses the temperature sensor 40 to monitor whether the temperature of the cooking chamber 20 reaches the keep warm temperature.

If the temperature of the cooking chamber 20 is lowered to the keep warm temperature, the control unit 90 turns on the heating source 30 to keep the temperature of the cooking chamber 20 at the keep warm temperature. In this case, the control unit 90 may display the keep warm state on the display unit 50 and inform the user of the keep warm state.

When the automatic keep warm function is not set in the automatic keep warm setting unit 70, the control unit 90 controls the cooking apparatus 1 in the general cooking mode to cook food. In detail, the control unit 90 turns on the heating source 30 to increase the cooking chamber 20 to the normal cooking temperature and keeps the normal cooking temperature for the general cooking time to cook food.

When the cooking of the food is completed, the control unit 90 may display the cooking completion through the display unit 50, etc., to let the user take out food.

According to the cooking apparatus having an automatic keep warm function according to an exemplary embodiment having the above structure, when cooking is completed, food is warmed right and therefore food keeps warm even when a long time passes.

Further, according to the cooking apparatus having an automatic keep warm function according to an exemplary embodiment, since the temperature of the cooking chamber becomes the keep warm temperature when cooking is completed, the case in which food is overlooked due to the residual heat of the heating source does not occur.

Although a few embodiments have been shown and described, it would be appreciated by those skilled in the art that changes may be made in these embodiments without departing from the principles of the invention, the scope of which is defined in the claims.

## Claims

1. A cooking apparatus (1) having an automatic keep warm function, comprising:
a heating source (30) to heat a cooking chamber (20);
a temperature sensor (40) to measure a temperature of the cooking chamber;
an automatic keep warm setting unit (70) to selectively set the automatic keep warm function; and
a control unit (90) configured, if the automatic keep warm function is set,
to control the heating source to set the temperature of the cooking chamber to a normal cooking temperature for food in the cooking chamber for a first cooking time, so that the food in the cooking chamber is cooked at its normal cooking temperature;
to control the heating source to set the temperature of the cooking chamber to a residual heat cooking temperature lower than the normal cooking temperature for a second cooking time, defining a residual heat cooking mode in which the food in the cooking chamber is cooked by residual heat of the heating source; and
to control the heating source to set the temperature of the cooking chamber to be a keep warm temperature lower than the residual heat cooking temperature, when cooking of the food in the cooking chamber is completed by cooking the food at the normal cooking temperature for the first cooking time and cooking the food in the residual heat cooking mode for the second cooking time.

2. The cooking apparatus (1) as claimed in claim 1, wherein the second cooking time is less than or equal to 30% of a total cooking time.

3. The cooking apparatus (1) as claimed in claim 1 or 2, wherein the residual heat cooking temperature is about 60% of the normal cooking temperature.

4. The cooking apparatus (1) as claimed in claim 1, 2 or 3, wherein the second cooking time when the control unit (90) cooks the food in the residual heat cooking mode includes a non-heating time for which the heating source (30) is turned off and a heating time for which the heating source is turned on at the residual heat cooking temperature, and
the heating time is set to be less than or equal to 50% of the second cooking time.

5. The cooking apparatus (1) as claimed in any one of the preceding claims, wherein the control unit (90) uses a timer (80) to determine whether the first cooking time passes and if it is determined that the first cooking time passes, turns off the heating source (30), the control unit uses the temperature sensor (40) to determine whether the temperature of the cooking chamber (20) reaches the residual heat cooking temperature and if it is determined that the temperature of the cooking chamber reaches the residual heat cooking temperature, turns on the heating source, and the control unit uses the timer to determine whether the time for which the heating source is turned on exceeds a preset heating time and if it is determined that the time for which the heating source is turned on exceeds the preset heating time, turns off the heating source.

6. The cooking apparatus (1) as claimed in claim 5, wherein the control unit (90) uses the temperature sensor (40) to determine whether the temperature of the cooking chamber (20) reaches the keep warm temperature and if it is determined that the temperature of the cooking chamber reaches the keep warm temperature, controls the heating source (30) to keep the temperature of the cooking chamber at the keep warm temperature.

7. The cooking apparatus (1) as claimed in claim 5 or 6, wherein the residual heat cooking mode includes at least two different residual heat cooking temperatures, and
the at least two different residual heat cooking temperatures are lowered stepwise with the passage of time.

8. The cooking apparatus (1) as claimed in any of the preceding claims, wherein if the automatic keep warm function is not selected by the automatic keep warm function setting unit (70), the control unit (90) controls the heating source (30) to cook the food at the normal cooking temperature.

9. The cooking apparatus (1) as claimed in claim 8, wherein when the food is cooked at the normal cooking temperature in a state in which the automatic keep warm function is not selected,
if the remaining cooking time is more than the second cooking time, the automatic keep warm setting unit (70) selects the automatic keep warm function, and
if the remaining cooking time is smaller than the second cooking time, the automatic keep warm setting unit does not select the automatic keep warm function.

10. The cooking apparatus (1) as claimed in any one of the preceding claims, wherein when the food is cooked at the normal cooking temperature in a state in which the automatic keep warm function is selected,
if the remaining cooking time is more than the second cooking time, the automatic keep warm setting unit (70) cancels the automatic keep warm function, and
if the remaining cooking time is smaller than the second cooking time, the automatic keep warm setting unit does not cancel the automatic keep warm function.

11. A method for controlling a cooking apparatus, comprising:
determining whether a cooking starting signal is input;
determining whether an automatic keep warm function is selected;
if it is determined that the automatic keep warm function is selected, cooking food at a normal cooking temperature for the food for a first cooking time;
if the first cooking time passes, cooking the food in a residual heat cooking mode at a residual heat cooking temperature lower than the normal cooking temperature for a second cooking time and setting a temperature of a cooking chamber to be a keep warm temperature lower than the residual heat cooking temperature when the cooking of the food is completed at expiration of the second cooking time; and
keeping the cooking chamber at the keep warm temperature.

12. The method as claimed in claim 11, wherein the second cooking time for which the food is cooked in the residual heat cooking mode includes a non-heating time for which a heating source is turned off and a heating time for which the heating source is turned on at the residual heat cooking temperature, and
the residual heat cooking temperature is 60% of the normal cooking temperature.

13. The method as claimed in claim 11 or 12, wherein the residual heat cooking mode includes at least two different residual heat cooking temperatures, and
the at least two different residual heat cooking temperatures are lowered stepwise with the passage of time.

14. The method as claimed in claim 11, 12 or 13, wherein if the automatic keep warm function is not selected, the food is cooked at the normal cooking temperature for a general cooking time.

## Patentansprüche

1. Garvorrichtung (1) mit einer automatischen Warmhaltefunktion, die Folgendes aufweist:
eine Heizquelle (30) zum Erwärmen eines Garraums (20);
einen Temperatursensor (40) zum Messen einer Temperatur des Garraums;
eine Warmhalteautomatik-Einstelleinheit (70) zum selektiven Einstellen der automatischen Warmhaltefunktion; und
eine Steuereinheit (90), die, falls die automatische Warmhaltefunktion eingestellt ist, konfiguriert ist
zum Steuern der Heizquelle zum Einstellen der Temperatur des Garraums auf eine normale Gartemperatur für Nahrungsmittel im Garraum für eine erste Garzeit, so dass das Nahrungsmittel im Garraum bei seiner normalen Gartemperatur gegart wird;
zum Steuern der Heizquelle zum Einstellen der Temperatur des Garraums auf eine Restwärme-Gartemperatur, die niedriger als die normale Gartemperatur ist, für eine zweite Garzeit, die einen Restwärme-Garmodus definiert, in dem das Nahrungsmittel im Garraum durch Restwärme der Heizquelle gegart wird; und
zum Steuern der Heizquelle zum Einstellen der Temperatur des Garraums, so dass sie eine Warmhaltetemperatur ist, die niedriger als die Restwärme-Gartemperatur ist, wenn das Garen des Nahrungsmittels im Garraum durch Garen des Nahrungsmittels bei der normalen Gartemperatur für die erste Garzeit und das Garen des Nahrungsmittels im Restwärme-Garmodus für die zweite Garzeit abgeschlossen wird.

2. Garvorrichtung (1) nach Anspruch 1, wobei die zweite Garzeit kleiner oder gleich 30 % einer gesamten Garzeit ist.

3. Garvorrichtung (1) nach Anspruch 1 oder 2, wobei die Restwärme-Gartemperatur etwa 60 % der normalen Gartemperatur ist.

4. Garvorrichtung (1) nach Anspruch 1, 2 oder 3, wobei die zweite Garzeit, wenn die Steuereinheit (90) das Nahrungsmittel im Restwärme-Garmodus gart, eine Nichtheizzeit, für die die Heizquelle (30) ausgeschaltet ist, und eine Heizzeit, für die die Heizquelle bei der Restwärme-Gartemperatur eingeschaltet ist, enthält und
die Heizzeit auf kleiner oder gleich 50 % der zweiten Garzeit eingestellt ist.

5. Garvorrichtung (1) nach einem der vorhergehenden Ansprüche, wobei die Steuereinheit (90) einen Zeitgeber (80) zum Bestimmen, ob die erste Garzeit abläuft, verwendet und, falls bestimmt wird, dass die erste Garzeit abläuft, die Heizquelle (30) ausschaltet, die Steuereinheit den Temperatursensor (40) zum Bestimmen, ob die Temperatur des Garraums (20) die Restwärme-Gartemperatur erreicht, verwendet und, falls bestimmt wird, dass die Temperatur des Garraums die Restwärme-Gartemperatur erreicht, die Heizquelle einschaltet und die Steuereinheit den Zeitgeber zum Bestimmen, ob die Zeit, für die die Heizquelle eingeschaltet ist, eine voreingestellte Heizzeit übersteigt, verwendet und, falls bestimmt wird, dass die Zeit, für die die Heizquelle eingeschaltet ist, die voreingestellte Heizzeit übersteigt, die Heizquelle ausschaltet.

6. Garvorrichtung (1) nach Anspruch 5, wobei die Steuereinheit (90) den Temperatursensor (40) zum Bestimmen, ob die Temperatur des Garraums (20) die Warmhaltetemperatur erreicht, verwendet und, falls bestimmt wird, dass die Temperatur des Garraums die Warmhaltetemperatur erreicht, die Heizquelle (30) zum Halten der Temperatur des Garraums auf der Warmhaltetemperatur steuert.

7. Garvorrichtung (1) nach Anspruch 5 oder 6, wobei der Restwärme-Garmodus wenigstens zwei verschiedene Restwärme-Gartemperaturen enthält und
die wenigstens zwei verschiedenen Restwärme-Gartemperaturen im Lauf der Zeit schrittweise gesenkt werden.

8. Garvorrichtung (1) nach einem der vorhergehenden Ansprüche, wobei die Steuereinheit (90), falls die automatische Warmhaltefunktion nicht von der Warmhalteautomatik-Einstelleinheit [A1] (70) ausgewählt wird, die Heizquelle (30) zum Garen des Nahrungsmittels bei normaler Gartemperatur steuert.

9. Garvorrichtung (1) nach Anspruch 8, wobei beim Garen des Nahrungsmittels bei der normalen Gartemperatur in einem Zustand, in dem die automatische Warmhaltefunktion nicht ausgewählt wird,
falls die verbleibende Garzeit länger als die zweite Garzeit ist, die Warmhalteautomatik-Einstelleinheit (70) die automatische Warmhaltefunktion auswählt und,
falls die verbleibende Garzeit kürzer als die zweite Garzeit ist, die Warmhalteautomatik-Einstelleinheit die automatische Warmhaltefunktion nicht auswählt.

10. Garvorrichtung (1) nach einem der vorhergehenden Ansprüche, wobei beim Garen des Nahrungsmittels bei der normalen Gartemperatur in einem Zustand, in dem die automatische Warmhaltefunktion ausgewählt ist,
falls die verbleibende Garzeit länger als die zweite Garzeit ist, die Warmhalteautomatik-Einstelleinheit (70) die automatische Warmhaltefunktion abbricht, und,
falls die verbleibende Garzeit kleiner als die zweite Garzeit ist, die Warmhalteautomatik-Einstelleinheit die automatische Warmhaltefunktion nicht abbricht.

11. Verfahren zum Steuern einer Garvorrichtung, das Folgendes aufweist:
Bestimmen, ob ein Garstartsignal eingegeben wurde;
Bestimmen, ob eine automatische Warmhaltefunktion ausgewählt wurde;
falls bestimmt wird, dass die automatische Warmhaltefunktion ausgewählt wurde, Garen eines Nahrungsmittels bei einer normalen Gartemperatur für das Nahrungsmittel für eine erste Garzeit;
falls die erste Garzeit abläuft, Garen des Nahrungsmittels in einem Restwärme-Garmodus bei einer Restwärme-Gartemperatur, die niedriger als die normale Gartemperatur ist, für eine zweite Garzeit und Einstellen einer Temperatur eines Garraums, so dass sie eine Warmhaltetemperatur ist, die niedriger als die Restwärme-Gartemperatur ist, wenn das Garen des Nahrungsmittels bei Ablauf der zweiten Garzeit abgeschlossen ist; und
Halten des Garraums auf der Warmhaltetemperatur.

12. Verfahren nach Anspruch 11, wobei die zweite Garzeit, für die das Nahrungsmittel im Restwärme-Garmodus gegart wird, eine Nichtheizzeit, für die eine Heizquelle ausgeschaltet ist, und eine Heizzeit, für die die Heizquelle bei der Restwärme-Gartemperatur eingeschaltet ist, enthält und
die Restwärme-Gartemperatur 60 % der normalen Gartemperatur ist.

13. Verfahren nach Anspruch 11 oder 12, wobei der Restwärme-Garmodus wenigstens zwei verschiedene Restwärme-Gartemperaturen enthält und
die wenigstens zwei verschiedenen Restwärme-Gartemperaturen im Lauf der Zeit schrittweise gesenkt werden.

14. Verfahren nach Anspruch 11, 12 oder 13, wobei das Nahrungsmittel, falls die automatische Warmhaltefunktion nicht ausgewählt wird, für eine allgemeine Garzeit bei der normalen Gartemperatur gegart wird.

## Revendications

1. Appareil de cuisson (1) ayant une fonction de garder chaud automatique, comprenant :
une source de chauffage (30) pour chauffer une chambre de cuisson (20) ;
un capteur de température (40) pour mesurer une température de la chambre de cuisson ;
une unité de réglage de garder chaud automatique (70) pour régler sélectivement la fonction de garder chaud automatique ; et
une unité de commande (90) configurée, si la fonction de garder chaud automatique est réglée,
pour assurer la commande de la source de chauffage afin de régler la température de la chambre de cuisson à une température de cuisson normale pour des aliments dans la chambre de cuisson pendant un premier temps de cuisson, de sorte que les aliments dans la chambre de cuisson soient cuits à leur température de cuisson normale ;
pour assurer la commande de la source de chauffage afin de régler la température de la chambre de cuisson à une température de cuisson à chaleur résiduelle, inférieure à la température de cuisson normale pendant un deuxième temps de cuisson, définissant un mode de cuisson à chaleur résiduelle dans lequel les aliments dans la chambre de cuisson sont cuits par une chaleur résiduelle de la source de chauffage ; et
pour assurer la commande de la source de chauffage afin de régler la température de la chambre de cuisson pour qu'elle soit une température de garder chaud inférieure à la température de cuisson à chaleur résiduelle, lorsque la cuisson des aliments dans la chambre de cuisson est achevée grâce à une cuisson des aliments à la température de cuisson normale pendant le premier temps de cuisson et une cuisson des aliments dans le mode de cuisson à chaleur résiduelle pendant le deuxième temps de cuisson.

2. Appareil de cuisson (1) tel que revendiqué dans la revendication 1, dans lequel le deuxième temps de cuisson est inférieur ou égal à 30 % d'un temps de cuisson total.

3. Appareil de cuisson (1) tel que revendiqué dans la revendication 1 ou 2, dans lequel la température de cuisson à chaleur résiduelle représente environ 60 % de la température de cuisson normale.

4. Appareil de cuisson (1) tel que revendiqué dans la revendication 1, 2 ou 3, dans lequel le deuxième temps de cuisson lorsque l'unité de commande (90) cuit les aliments dans le mode de cuisson à chaleur résiduelle inclut un temps de non chauffage pendant lequel la source de chauffage (30) est désactivée et un temps de chauffage pendant lequel la source de chauffage est activée à la température de cuisson à chaleur résiduelle, et
le temps de chauffage est réglé pour être inférieur ou égal à 50 % du deuxième temps de cuisson.

5. Appareil de cuisson (1) tel que revendiqué dans l'une quelconque des revendications précédentes, dans lequel l'unité de commande (90) utilise une minuterie (80) pour déterminer si le premier temps de cuisson passe et s'il est déterminé que le premier temps de cuisson passe, désactive la source de chauffage (30), l'unité de commande utilise le capteur de température (40) pour déterminer si la température de la chambre de cuisson (20) atteint la température de cuisson à chaleur résiduelle et s'il est déterminé que la température de la chambre de cuisson atteint la température de cuisson à chaleur résiduelle, active la source de chauffage, et l'unité de commande utilise la minuterie pour déterminer si le temps pendant lequel la source de chauffage est activée dépasse un temps de chauffage préréglé et s'il est déterminé que le temps pendant lequel la source de chauffage est activée dépasse le temps de chauffage préréglé, désactive la source de chauffage.

6. Appareil de cuisson (1) tel que revendiqué dans la revendication 5, dans lequel l'unité de commande (90) utilise le capteur de température (40) pour déterminer si la température de la chambre de cuisson (20) atteint la température de garder chaud et s'il est déterminé que la température de la chambre de cuisson atteint la température de garder chaud, assure la commande de la source de chauffage (30) afin de maintenir la température de la chambre de cuisson à la température de garder chaud.

7. Appareil de cuisson (1) tel que revendiqué dans la revendication 5 ou 6, dans lequel le mode de cuisson à chaleur résiduelle inclut au moins deux différentes températures de cuisson à chaleur résiduelle, et
lesdites au moins deux différentes températures de cuisson à chaleur résiduelle sont abaissées par étapes avec le passage du temps.

8. Appareil de cuisson (1) tel que revendiqué dans l'une quelconque des revendications précédentes, dans lequel si la fonction de garder chaud automatique n'est pas sélectionnée par l'unité de réglage de garder chaud automatique [A1] (70), l'unité de commande (90) assure la commande de la source de chauffage (30) afin de cuire les aliments à la température de cuisson normale.

9. Appareil de cuisson (1) tel que revendiqué dans la revendication 8, dans lequel lorsque les aliments sont cuits à la température de cuisson normale dans un état dans lequel la fonction de garder chaud automatique n'est pas sélectionnée,
si le temps de cuisson restant est supérieur au deuxième temps de cuisson, l'unité de réglage de garder chaud automatique (70) sélectionne la fonction de garder chaud automatique, et
si le temps de cuisson restant est inférieur au deuxième temps de cuisson, l'unité de réglage de garder chaud automatique ne sélectionne pas la fonction de garder chaud automatique.

10. Appareil de cuisson (1) tel que revendiqué dans l'une quelconque des revendications précédentes, dans lequel lorsque les aliments sont cuits à la température de cuisson normale dans un état dans lequel la fonction de garder chaud automatique est sélectionnée,
si le temps de cuisson restant est supérieur au deuxième temps de cuisson, l'unité de réglage de garder chaud automatique (70) annule la fonction de garder chaud automatique, et
si le temps de cuisson restant est inférieur au deuxième temps de cuisson, l'unité de réglage de garder chaud automatique n'annule pas la fonction de garder chaud automatique.

11. Procédé pour commander un appareil de cuisson, comprenant :
la détermination pour savoir si un signal de commencement de cuisson est entré ;
la détermination pour savoir si une fonction de garder chaud automatique est sélectionnée ;
s'il est déterminé que la fonction de garder chaud automatique est sélectionnée, la cuisson des aliments à une température de cuisson normale pour les aliments pendant un premier temps de cuisson ;
si le premier temps de cuisson passe, la cuisson des aliments dans un mode de cuisson à chaleur résiduelle à une température de cuisson à chaleur résiduelle, inférieure à la température de cuisson normale, pendant un deuxième temps de cuisson et le réglage d'une température d'une chambre de cuisson pour qu'elle soit une température de garder chaud, inférieure à la température de cuisson à chaleur résiduelle lorsque la cuisson des aliments est achevée à l'expiration du deuxième temps de cuisson ; et
le maintien de la chambre de cuisson à la température de garder chaud.

12. Procédé tel que revendiqué dans la revendication 11, dans lequel le deuxième temps de cuisson pendant lequel les aliments sont cuits dans le mode de cuisson à chaleur résiduelle inclut un temps de non chauffage pendant lequel une source de chauffage est désactivée et un temps de chauffage pendant lequel la source de chauffage est activée à la température de cuisson à chaleur résiduelle, et
la température de cuisson à chaleur résiduelle représente 60 % de la température de cuisson normale.

13. Procédé tel que revendiqué dans la revendication 11 ou 12, dans lequel le mode de cuisson à chaleur résiduelle inclut au moins deux différentes températures de cuisson à chaleur résiduelle, et
lesdites au moins deux différentes températures de cuisson à chaleur résiduelle sont abaissées par étapes avec le passage du temps.

14. Procédé tel que revendiqué dans la revendication 11, 12 ou 13, dans lequel si la fonction de garder chaud automatique n'est pas sélectionnée, les aliments sont cuits à la température normale de cuisson pendant un temps de cuisson général.
